# EUROPÄISCHE PATENTSCHRIFT

(11) **EP 3 389 388 B1**
(45) Veröffentlichungstag und Bekanntmachung des Hinweises auf die Patenterteilung: **24.06.2020**
(21) Anmeldenummer: 16809362.3
(22) Anmeldetag: 08.12.2016
(51) Int. Cl.: A23G 1/48, A23L 25/00

(54) **VERZEHRFÄHIGES KAKAOERZEUGNIS**
EDIBLE COCOA PRODUCT
PRODUIT COMESTIBLE À BASE DE CACAO

(30) Priorität: 15.12.2015 DE 102015225225
(43) Veröffentlichungstag der Anmeldung: 24.10.2018
(73) Patentinhaber: Gebrüder Neeb Gmbh & Co. KG, 82166 Gräfelfing (DE)
(72) Erfinder: LEDERER, Ludwig, 82166 Gräfelfing (DE)
(74) Vertreter: Rösler, Uwe
(86) Internationale Anmeldenummer: PCT/EP2016/080163
(87) Internationale Veröffentlichungsnummer: WO 2017/102522

(56) Entgegenhaltungen:
- WO-A1-2009/103262
- CN-A- 102 224 874
- US-A- 3 463 097
- US-A- 5 714 193
- US-B1- 6 521 273

## Beschreibung

### Technisches Gebiet

Die Erfindung bezieht sich auf ein verzehrfähiges Kakaoerzeugnis, das eine formstabile, in Art, Konsistenz und Geschmack homogene Schokoladenmasse besitzt, in der Bruchstücke aus Buchweizenkörner enthalten sind.

### Stand der Technik

Der großen Vielzahl an unterschiedlichen Schokoladensorten und daraus gefertigten Schokoladenprodukten liegt der Rohstoff Kakao zugrunde, der seither als werthaltiger Rohstoff gehandelt wird und im Rahmen eines technisch anspruchsvollen Verarbeitungsprozesses unter Beimengung von Zucker, Öl oder Fett, vorzugsweise in Form von Kakaobutter, sowie gegebenenfalls von Milchpulver zu einer hochwertigen Schokoladenmasse verarbeitet wird. Aufgrund von Beschaffungsproblemen von Kakao wurden zu Beginn des 19. Jahrhunderts zur Schokoladenherstellung der Schokoladenmasse geröstete und gemahlene Haselnüsse beigemengt, um so die Schokoladenmasse zu strecken. Aufgrund ihrer wohlschmeckenden Geschmacksnote sowie von Weiterentwicklungen den Herstellungsprozess betreffend, wurde aus einer anfänglichen Verlegenheitslösung in späterer Zeit eine als Nougat bekannt gewordene Schokoladenspezialität.

Haselnüsse enthalten neben Macadamianüssen, Paranüssen, Pecannüssen und Walnüssen einen hohen Fettgehalt von über 60g pro 100g Nussfrucht und tragen somit neben der Beigabe von Ölen und Fetten, wie beispielsweise Kakaobutter, sowie Fett oder Kokosfett, entscheidend zum hohen ernährungsphysiologischen Brennwert des Schokoladenproduktes bei.

Neben der Vielzahl der für den menschlichen Organismus in Haselnüssen enthaltenen positiven Inhaltsstoffen, wie beispielsweise ungesättigte Fettsäuren, hochwertige Eiweiße, Vitamine und Mineralstoffe, müssen Allergiker auf den Genuss von Haselnüssen oftmals ganz verzichten, da Haselnüsse allergische Stoffe, wie beispielsweise Birkenpollen sowie auch Gluten enthalten. Insbesondere Gluten stellt für einen immer größer werdenden Personenkreis die Ursache für den Verzicht auf den Verzehr von Haselnüssen enthaltende Nahrungs- und Genussmittel dar.

Aus diesem Grunde ist eine Vielzahl von Vorstößen unternommen worden, die Zugabe von Haselnüssen bei der Herstellung von verzehrfähigen Kakaoerzeugnissen, allen voran von Nougatschokolade, durch andere Kern- oder Nusssorten zu substituieren.

In der chinesischen Druckschrift CN 103652233 A ist ein Nougatprodukt offenbart, in dem anstelle von Haselnüssen in der Hauptsache Cashewnüsse und eine spezielle Wildpilzart, nämlich Matsutake, enthalten ist.

Aus der österreichischen Druckschrift AT 163512, die ein kakao- oder schokoladenähnliches Produkt auf der Basis von Kürbiskernen beschreibt, kann entnommen werden, dass zum Zwecke der Herstellung kakaoähnlicher Nahrungsmittel enthülste, stärkehaltige, pflanzliche Stoffe, wie insbesondere Gerste, Hafer, Buchweizen oder Legominosen, Kastanien, Eicheln und dergleichen geröstet und vermahlt werden, und das so erhaltene geröstete Pulver mit Kakao, Trockenmilch, Rohr- oder Rübenzucker, Kaffeepulver oder Kaffee-Ersatzmittel versetzt wird.

Die US-Druckschrift US 6,521,273 B1 beschreibt eine trinkfähige Schokoladenzubereitung auf der Basis von Schokoladenlikör, dem anstelle von Kakaopulver ein Kakaoersatzstoff beigemengt ist in Form eines fein gemahlenen, gerösteten Getreidemalzes, beispielsweise Gerste, Weizen, Roggen, Buchweizen, Hafer, Reis oder eine Mischung aus den vorstehend genannten Getreidesorten.

Neben den theoretischen Möglichkeiten für die Zubereitung eines verzehrfähigen Kakaoerzeugnisses kommt es insbesondere auf die Verbraucherakzeptanz bei einem im Markt platzierten Produkt an. Neben den immer mehr in den Fokus der Aufmerksamkeit der Verbraucher rückenden ernährungsphysiologischen Eigenschaften des jeweiligen Genussmittels, spielen vor allem der Geschmackseindruck sowie der sensorisch, wahrnehmbare Verzehreindruck eine wichtige Rolle.

Unter den derzeit auf dem Markt verfügbaren Kakaoerzeugnissen in Form von Schokoladentafeln, in denen Buchweizenkörner enthalten bzw. verarbeitet sind, ist ein Produkt der Firma Shokocrown GmbH, die unter der eingetragenen deutschen Marke "Shokomonk" ihre Produkte vertreibt, bekannt, das im Wesentlichen aus einer hochwertigen Vollmilch-Schokolade besteht, der geschälte, geröstete ganze Buchweizenkörner mit einem Volumen-Anteil von ca. 10% beigemengt ist.

Ferner existieren Schokoladeerzeugnisse der Firma Zotter Schokoladenmanufaktur GmbH, die auf rein pflanzlicher Milchschokolade basieren und statt mit Milchpulver, mit Buchweizenpulver zubereitet sind.

Gleichwohl die bekannten Buchweizen enthaltenden Kakaoerzeugnissen über die vorstehend beschriebenen vorteilhaften ernährungsphysiologischen Eigenschaften verfügen, wird der Geschmackseindruck vorwiegend durch die Schokoladenmasse und nicht durch die den Buchweizenkörnern zueigene, typisch nussige Geschmacksnote geprägt. Dies mag im Falle der Schokoladenprodukte mit ganzen Buchweizenkörnern an einem zu geringen Buchweizenanteil liegen. Andererseits würde eine Erhöhung des Anteils das mechanische Verzehrgefühl beeinträchtigen, zumal die Buchweizenkörner über eine spürbare Körnerhärte verfügen. Im Falle einer Beimischung von Buchweizenpulver in die Schokoladenmasse ist zu beachten, dass sich der typisch nussige Eigengeschmack verliert je feiner die Buchweizenkörner gemahlen und zu einem Buchweizenpulver überführt werden.

Aus der Druckschrift RU 2 462 040 C2 ist eine Schokoladenzubereitung zu entnehmen, die über einen geringen Kaloriengehalt verfügen soll und in der neben der eigentlichen Schokoladenmasse wenigstens eine Zugabe aus einer sehr großen Vielzahl in der Druckschrift erwähnter Zugaben enthalten ist, so beispielsweise u.a. Buchweizen. Die wenigstens eine Zugabe wird gemahlen und in partikulärer Form mit Partikelgrößen von 60 µm bis 1 mm der Schokoladenmasse beigemischt. Im Falle von Buchweizen als Zugabe führt dies zur vorstehenden Geschmacksneutralität, so dass hierdurch ein Schokoladenprodukt ohne erkennbaren, vom Buchweizenanteil herrührenden Eigengeschmack erhalten wird.

Die Druckschrift CN 102 224 874 A offenbart ein Schokoladenprodukt mit Vanillegeschmack, in dem neben einer Vielzahl von geschmacksbildenden Zutaten wie natürlicher Vanille, Hiobstränengras, Vanillin, Kristallzucker auch Hafer, Buchweizen und Sojalecithin beigemengt ist. Sämtliche Zutaten werden vor der Zugabe in die Schokoladenmasse zu Pulver gemahlen mit einer Partikelgröße von kleiner 20 µm.

Die Druckschrift US 6 521 273 B1 beschreibt ein Schokoladenerzeugnis aus einer Vielzahl von Getreide- bzw. Pseudogetreidesorten, unter denen u.a. Buchweizenkörner genannt sind. Die als "Kakaoverlängerer" eingesetzten Getreidezugaben werden einer Mälzung unterzogen, die einem kontrollierten Keimvorgang entspricht, bei dem aus Getreide Malz entsteht.

### Darstellung der Erfindung

Der Erfindung liegt die Aufgabe zugrunde, ein verzehrfähiges Kakaoerzeugnis, das eine formstabile, in Art, Konsistenz und Geschmack homogene Schokoladenmasse besitzt, in der zumindest Bruchstücke aus Buchweizenkörner enthalten sind, derart zu modifizieren, so dass die den Buchweizenkörnern naturgemäß innewohnende nussige Geschmacksnote innerhalb des Kakaoerzeugnisses erhalten bleibt und voll zum Tragen kommt. Dabei gilt es insbesondere, den körnigen Charakter der Buchweizenkörner durch entsprechende Zerkleinerung signifikant zu reduzieren, so dass beim Verzehren des Kakaoerzeugnisses die Anwesenheit von Buchweizenkörnern beim haptischen bzw. sensorischen Verzehreindruck in den Hintergrund tritt. Ein erklärtes Ziel besteht insbesondere darin, ein verzehrfertiges Kakaoerzeugnis anzugeben, das als eine Art Nougatersatzschokolade betrachtet werden kann, mit einem geschmackssensorisch nussig geprägten Eigengeschmack, der ausschließlich auf die Verwendung von Buchweizenkörnern zurückzuführen ist. Das Kakaoerzeugnis soll glutenfrei und für Haselnuss-Allergiker unproblematisch genießbar sein.

Die Lösung der der Erfindung zugrundeliegenden Aufgabe ist im Anspruch 1 angegeben. Vorteilhafte Merkmale, die den Lösungsgedanken weiterbilden, sind Gegenstand der Unteransprüche sowie der weiteren Beschreibung zu entnehmen.

Das lösungsgemäße verzehrfähige Kakaoerzeugnis zeichnet sich dadurch aus, dass die in der Schokoladenmasse enthaltenen Bruchstücke aus Buchweizenkörner eine Fragmentgröße besitzen, die maximal der Hälfte eines Buchweizenkorns und minimal 50 µm beträgt. Vor der Fragmentierung sind die Buchweizenkörner einer die Konsistenz der Buchweizenkörner beeinflussenden Vorbehandlung unterzogen worden, durch die insbesondere der natürliche Eigengeschmack intensiviert und die natürliche Kornhärte der Buchweizenkörner reduziert werden. Die Vorbehandlung umfasst wenigstens eine Röstung unter Einsatz von Speiseöl. Die vorbehandelten und fragmentierten Bruchstücke aus Buchweizenkörner sind gleich, im Sinne von homogen verteilt in der festen Schokoladenmasse vermengt.

In einer bevorzugten erste Ausführungsvariante des lösungsgemäßen, verzehrfähigen Kakaoerzeugnisses, das als eine Art Nougatersatzschokolade anzusehen ist, gilt es die Fragmentgrößen der Bruchstücke aus Buchweizenkörner möglichst klein zu wählen, um einen möglichst cremigen Verzehreindruck zu erhalten. Hierbei gilt es jedoch die nachfolgenden Erkenntnisse zu berücksichtigen:
Im Rahmen einer Vielzahl von Versuchen hat sich ergeben, dass eine Zerkleinerung von Buchweizenkörnern im Wege von Schrot- und Mahlverfahren auf Fragmentgrößen von 200 µm und kleiner zu einem nachhaltigen Verlust des natürlichen nussigen Geschmackseindrucks von ansonsten unbehandelten Buchweizenkörnern führt. Ferner verfügt die menschliche Zunge über eine taktile Empfindlichkeit, mit der es möglich ist, Bestandteile von wenigen 10 µm voneinander zu unterscheiden. Aus diesen Gründen ist es nicht zielführend natürliche, d.h. nicht vorbehandelte Buchweizenkörner auf Partikelgrößen von kleiner 200 µm zu mahlen, zumal sie keinen geschmacklichen Beitrag mehr leisten und überdies sensorisch ertastet werden können.

Erst durch eine die Konsistenz der Buchweizenkörner gezielt beeinflussende Vorbehandlung gestattet es die Partikelgröße der Buchweizenkörner auf ein Maß zu reduzieren, bei dem die taktilen Unterscheidungsfähigkeiten der Zunge zwar nicht unterschritten werden, so doch zumindest annähernd erreicht werden können, ohne dabei einen nennenswerten Geschmacksverlust am wahrnehmbaren charakteristischen Nussaroma von Buchweizenkörnern in Kauf nehmen zu müssen.

Es ist erkannt worden, dass eine spezielle Vorbehandlung der Buchweizenkörner die vorstehenden Voraussetzungen zu erfüllen vermag und das Buchweizenaromas erhält selbst im Falle von gemahlenen Buchweizenfragmenten mit Fragmentgrößen hinab bis zu 50 µm. Eine hierzu geeignete Vorbehandlung ist in der Druckschrift EP 2 244 589 B1 erläutert und sieht zunächst eine Schälung der Buchweizenkörner vor, die außer dem eigentlichen Schälvorgang keine weitere Vorbehandlung voraussetzt. Die geschälten Buchweizenkörner werden nach Art einer Röstung erhitzt, wobei die Buchweizenkörner vorzugsweise in ein Röstbehältnis, beispielsweise in Art einer Röstpfanne, ohne weitere Zusatzmittel gegeben werden, in der sie möglichst schnell und effektiv einer Erhitzung erfahren. Die für diesen Röstvorgang erforderlichen Rösttemperaturen betragen maximal 200°C, wobei darauf zu achten ist, dass die geschälten Buchweizenkörner einer ständigen Durchmischung innerhalb des Röstbehältnisses unterliegen, um röstbedingte Degradationserscheinungen, wie Verbrennungen zu vermeiden. Je nach Menge und eingestellter Rösttemperatur kann dieser erste Röstvorgang einige wenige Minuten betragen, so dass die Buchweizenkörner einen vorgerösteten Zustand erfahren, indem sie beispielsweise im Wege einer Handprobe einen heißen bis sehr heißen Temperatureindruck zu vermitteln in der Lage sind.

Die in vorstehenden Weise vorgerösteten Buchweizenkörner werden nun unter Zugabe eines Speiseöls, vorzugsweise von Sesam- oder Rapskernöl weiter geröstet, wobei die Rösttemperatur zur Vermeidung der Verbrennung des zuzuführenden Speiseöls reduziert wird. Die Zugabe an Speiseöl erfolgt in einer Menge, mit der eine vollständige Benetzung der Oberflächen sämtlicher Buchweizenkörner gewährleistet ist. Die mit etwas reduzierter Rösttemperatur durchgeführte, schonende Röstung der geölten Buchweizenkörner führt dazu, dass die Buchweizenkörner das zugegebene Speiseöl über ihre Oberfläche in das Innere der Körner aufnehmen. Wieder erfolgt der Röstvorgang bei ständigem Umrühren und Durchmischen der Buchweizenkörner innerhalb des Röstbehältnisses und es wird solange Speiseöl in dosierter Form den Buchweizenkörnern zugegeben, bis die Kerne nicht mehr in der Lage sind weiteres Öl über ihre jeweiligen Körneroberflächen aufzunehmen. Haben die Buchweizenkörner im Zuge des Röstvorganges eine goldgelbe Farbe erreicht, ein Zustand, der wie bereits vorstehend erwähnt in Abhängigkeit der zu verarbeitenden Menge an Buchweizenkörner nach ca. zehn oder mehr Minuten an Röstzeit einstellt, so kann der Prozess der Vorbehandlung beendet werden.

Um die Buchweizenkörner in ihrem Geschmack zu modifizieren bzw. zu intensivieren, ist es optional möglich, den Röstvorgang fortzusetzen, indem die Rösttemperatur erneut auf maximal 200°C erhöht wird, wobei unter ununterbrochenem weiteren Durchmischen der Buchweizenkörner Gewürzstoffe, wie beispielsweise Salz, Zucker oder eine wenigstens ein Aroma enthaltende Lösung beigegeben wird. Die Beigabe von Gewürzstoffen, die in gelöster Form vorliegen, erfolgt vorzugsweise in Form eines Sprays auf die in dem Röstbehältnis befindlichen geölten und gerösteten Buchweizenkörner. Der Spray- oder Sprühauftrag wird möglichst homogen und flächendeckend auf die im Röstbehältnis enthaltenen vorbehandelten Buchweizenkörner vorgenommen.

Durch den Sprühauftrag des wenigstens einen Gewürzstoffes, der in gelöster Form in einem Lösungsmittel, bspw. in Wasser, vorliegt, werden sämtliche im Röstbehältnis vorhandenen, geölten und gerösteten Buchweizenkörner an ihrer Oberfläche benetzt, wobei aufgrund der herrschenden Rösttemperaturen der Flüssiganteil des Lösungsmittels verdampft und zumindest die nicht verdampfbaren Restbestandteile des Gewürzstoffes an den Buchweizenkörnern haften bleiben.

Der Vorgang der Sprühbeaufschlagung der im Röstbehältnis unter ständiger Durchmischung befindlichen Buchweizenkörner sollte vorzugsweise mehrfach hintereinander durchgeführt werden. In Versuchsröstungen hat sich herausgestellt, dass eine drei- bis fünfmalige Wiederholung der Spraybeaufschlagung der gerösteten Buchweizenkörner ausreicht, um eine geschmacklich annehmbare aromatische Note der Buchweizenkörner zu erhalten.

Als mögliche aromatische Gewürzstoffe kommen insbesondere zuckerhaltige Lösungen, wie bspw. Reissirup, Dinkelsirup, Ahornsirup, Vollrohrzucker oder ähnliche natürliche Zuckerprodukte in Frage, die vorzugsweise auch zur weiteren Verdünnung in geeigneten Lösungsmitteln beigemischt werden können.

Insbesondere im Falle der Verwendung einer zuckerhaltigen Lösung werden die Oberflächen der einzelnen Buchweizenkörner im Wege einer durch die vorherrschende Rösttemperatur einsetzenden Art von Karamellisierung des beigegebenen Zuckers von einer Zuckerschicht überzogen. Die Menge des zuzugebenden Zuckers ist vorzugsweise derart bemessen, dass die sich an den Oberflächen der Buchweizenkörner anhaftende Zuckerschicht verhältnismäßig dünn ist, vorzugsweise im Bereich zwischen einigen zehn bis einigen 100 Mikrometer liegt.

Der Röstvorgang wird solange fortgesetzt, bis sämtliche Flüssiganteile des jeweiligen Lösungsmittels verdampft sind. Nach entsprechender Abkühlung können die so vorbehandelten Buchweizenkörner einer entsprechenden Fragmentierung im Rahmen eines Schrot- und/oder Mahlprozesses zugeführt werden.

Zur Realisierung der eingangs erwähnten ersten Ausführungsvariante, die in Konsistenz und Geschmack einer an sich bekannten Nougatschokolade nachempfunden ist und anstelle von Haselnüssen auf Buchweizenkörnern basiert, eignen sich fragmentierte und in der vorstehenden Weise vorbehandelte Buchweizenkörner mit Fragmentgrößen zwischen 50 µm und 200 µm. Je größer der Anteil von Buchweizenfragmenten mit Fragmentgrößen von 50 µm oder nahe 50 µm ist, umso besser nähert sich der sinnbasierte Gefühlseindruck beim Verzehr des Kakaoproduktes einer Nougatkonsistenz an.

Nicht notwendigerweise muss jedoch der cremige, partikelfreie Geschmackseindruck beim Verzehr des lösungsgemäßen Kakaoproduktes im Vordergrund stehen. Selbstverständlich bieten die vorstehend vorbehandelten und nachfolgend fragmentierten Buchweizenkörner die Grundlage für eine Vielzahl weiterer Kakaoerzeugnisse, deren Geschmackseindruck in dominierender Weise durch das Aroma von Buchweizenkörnern geprägt ist.

Grundsätzlich eignen sich in besonders vorteilhafter Weise Bruchstücke von Buchweizenkörner mit einer Fragmentgröße zwischen 50 µm und 2000 µm für die Vermengung in die Schokoladenmasse des Kakaoerzeugnisses. Hierbei gilt die Maxime, je größer der Anteil an Bruchstücken größer 200 µm, umso mehr tritt der partikulare Verzehr-Charakter jedes einzelnen Bruchstückes in den Vordergrund ohne dabei als hart und infolgedessen als unangenehm in Erscheinung zu treten, zumal die größer dimensionierten Bruchstücke im Bereich zwischen 200 µm und 2000 µm, vornehmlich zwischen 500 µm bzw. 1000 µm und 2000 µm, aufgrund ihrer Vorbehandlung als knusprig, kross in Erscheinung treten.

Somit lassen sich verzehrfähige Kakaoerzeugnisse mit einem jeweils unterschiedlichen sensorisch wahrnehmbaren Geschmacksempfinden designen, je nach Abhängigkeit der gewählten Fragmentgrößen.

Das lösungsgemäße Kakaoerzeugnis weist einen ersten Anteil von Bruchstücken mit einer Fragmentgröße zwischen 50 µm und 200 µm sowie einen zweiten Anteil von Bruchstücken mit einer Fragmentgröße zwischen 200 µm und 500 µm in der festen Schokoladenmasse auf. Bei jeweils gleichbleibenden Geschmackseindruck kann der haptische Verzehreindruck dadurch variiert werden, indem der erste Anteil größer, kleiner oder gleich dem zweiten Anteil gewählt wird.

Ferner ist ein dritter Anteil von Bruchstücken mit Fragmentgrößen zwischen 500 µm und 2000 µm in der festen Schokoladenmasse gleich, d.h. homogen verteilt enthalten. Überwiegen beispielsweise die dem dritten Anteil zugehörigen Bruchstücke, so ist der Verzehreindruck stark durch die sensorisch deutlich wahrnehmbaren Buchweizenkörnerbruchstücke geprägt. Selbstverständlich können die Größenbereiche der einzelnen genannten Anteile beliebig gewählt werden.

Die Vorbehandlung der Buchweizenkörner ermöglicht im Wege des stufenweisen Röstvorganges eine individuelle geschmackliche Konditionierung der Buchweizenkörner in Abhängigkeit aromatischer Zugaben oder Gewürzzugaben sowie auch von Zucker. So lassen sich die Buchweizenkörner bspw. karamellisieren, wodurch das Kakaoprodukt einen krokantartigen Geschmackseindruck erfährt, insbesondere bei einer Vermengung von karamellisierten Buchweizenbruchstücken mit Fragmentgrößen zwischen 1000 µm und 2000 µm.

In einer Standardvariante für die Herstellung der Schokoladenmasse bietet es sich an zumindest Kakaopulver und einen Öl- oder Fettzusatz zu verwenden, der vorzugsweise wenigstens ein Öl oder Fett aus der nachstehenden Gruppe betrifft: Kakaobutter, Haselnussöl, Aprikosenöl, Pflanzenfett, Sojalecithin, Sal-Butter, Kokosfett oder Sheabutter.

In einer bevorzugten Verfeinerung der Schokoladenmasse bietet es sich ferne an, Zucker, Milchpulver, Aromastoffe, Zimt sowie und/oder Vanillin der Schokoladenmasse beizumengen.

In einem Beispiel für ein lösungsgemäßes Kakaoprodukt sind der Schokoladenmasse gemahlene Buchweizenbruchstücke mit der nachfolgenden Fragmentgrößenverteilung beigemengt:
> 500 µm: 7,3%; > 200 µm: 68,4%, > 100 µm: 21.1 %; < 100 µm: 3,2 %

## Patentansprüche

1. Verzehrfähiges Kakaoerzeugnis, das eine formstabile, in Art, Konsistenz und Geschmack homogene Schokoladenmasse besitzt, in der Bruchstücke aus Buchweizenkörner enthalten sind,
**dadurch gekennzeichnet, dass** die Bruchstücke eine Fragmentgröße besitzen, die zwischen 50 µm und 2000 µm beträgt, von denen ein erster Anteil von Bruchstücken mit einer Fragmentgröße zwischen 50 µm und 200 µm, ein zweiter Anteil von Bruchstücken mit einer Fragmentgröße zwischen 200 µm und 500 µm sowie ein dritter Anteil von Bruchstücken mit einer Fragmentgröße zwischen 500 µm und 2000 µm in der festen Schokoladenmasse verteilt enthalten sind, und
dass der erste Anteil größer als der zweite Anteil und der zweite Anteil größer als der dritte Anteil ist,
dass die Bruchstücke der Buchweizenkörner im Wege einer die Konsistenz der Buchweizenkörner beeinflussenden Vorbehandlung, bei der die Buchweizenkörner wenigstens einer Röstung unter Einsatz von Speiseöl unterliegen, bei der geschälte Buchweizenkörner ohne weitere Vorbehandlung bereitgestellt und nach Art einer Röstung zum Erhalt vorgerösteter Buchweizenkörner erhitzt werden und an die vorgerösteten Buchweizenkörner unter Fortdauer der Röstung Speiseöl derart zugegeben wird, dass das Speiseöl in einer Menge den vorgerösteten Buchweizenkörner beigegeben wird, so dass die Buchweizenkörner oberflächig von dem Speiseöl vollständig benetzt werden, wobei die Fortdauer der Röstung solange erfolgt bis die Buchweizenkörner eine durch die Ölaufnahme und die Röstung hervorgerufene goldgelbe Färbung erhalten, und einer nachfolgenden Fragmentierung erhalten sind, und
dass die Bruchstücke aus Buchweizen gleichverteilt in der festen Schokoladenmasse vermengt sind.

2. Kakaoerzeugnis nach Anspruch 1,
**dadurch gekennzeichnet, dass** die geölten und goldgelb gerösteten Buchweizenkörner mit einer Salz, Zucker oder wenigstens ein Aroma enthaltenden Lösung im Wege eines Sprühauftrages oberflächig benetzt werden,
und
dass die Röstung bei einer Rösttemperatur von maximal 200 °C bis zum Erhalt der lösungsmittelfreien, Salz-, Zucker- oder Aroma-haltigen, gerösteten Buchweizenkörner fortgesetzt wird.

3. Kakaoerzeugnis nach Anspruch 1 oder 2,
**dadurch gekennzeichnet, dass** das Fragmentieren der Buchweizenkörner im Wege eines Schrot- und/oder Mahlvorganges erfolgt ist.

4. Kakaoerzeugnis nach einem der Ansprüche 1 bis 3,
**dadurch gekennzeichnet, dass** die Schokoladenmasse zumindest folgende Bestandteile enthält: Kakaopulver sowie ein Öl- oder Fettzusatz.

5. Kakaoerzeugnis nach Anspruch 4,
**dadurch gekennzeichnet, dass** zumindest ein weiterer Bestandteil der folgenden Bestandteile in der Schokoladenmasse enthalten ist: Zucker, Milchpulver, Aromastoff, Zimt, Vanillin.

6. Kakaoerzeugnis nach Anspruch 4 oder 5,
**dadurch gekennzeichnet, dass** der Öl- oder Fettzusatz wenigstens ein Öl oder Fett aus der nachstehenden Gruppe ist: Kakaobutter, Haselnussöl, Aprikosenöl, Pflanzenfett, Sojalecithin, Sal-Butter, Kokosfett, Sheabutter.

7. Kakaoerzeugnis nach einem der Ansprüche 1 bis 6,
**dadurch gekennzeichnet, dass** das Speiseöl Sesam oder Rapskernöl ist.

## Claims

1. Edible cocoa product which has a dimensionally stable chocolate mass that is homogeneous in type, consistency and taste, and which contains fragments of buckwheat grains,
**characterized in that** the fragments have a fragment size which is between 50 µm and 2000 µm, of which a first fraction consisting of fragments with a fragment size between 50 µm and 200 µm, a second fraction consisting of fragments with a fragment size between 200 µm and 500 µm, and a third fraction consisting of fragments with a fragment size between 500 µm and 2000 µm are contained in distribution in the solid chocolate mass, and
that the first fraction is larger than the second fraction and the second fraction is larger than the third fraction,
that the fragments of the buckwheat grains are obtained in the course of a pre-treatment that alters the consistency of the buckwheat grains, during which the buckwheat grains undergo at least one roasting process with the use of edible oil, during which shelled buckwheat grains are supplied without additional pre-treatment and are heated in the manner of a roasting process to obtain pre-roasted buckwheat grains, and edible oil is added to the pre-roasted buckwheat grains while the roasting process continues such that the edible oil is added to the pre-roasted buckwheat grains in such quantity that the surface of the buckwheat grains is completely coated with the edible oil, wherein the roasting process continues until the buckwheat grains take on a golden-yellow colouration caused by the oil absorption and the roasting process, and a subsequent fragmentation, and
that the fragments of buckwheat are mixed in even distribution in the solid chocolate mass.

2. Cocoa product according to Claim 1,
**characterized in that** the surface of the oiled and golden-yellow roasted buckwheat grains is coated with a solution that contains salt, sugar or at least one flavouring substance in a sprayed application,
and
that the roasting process is continued at a roasting temperature not exceeding 200 °C until the roasted buckwheat grains are obtained free of solvent and containing salt, sugar or flavouring substance.

3. Cocoa product according to Claim 1 or 2, **characterized in that** the fragmentation of the buckwheat grains is carried out in the form of a crushing and/or grinding process.

4. Cocoa product according to any one of Claims 1 to 3, **characterized in that** the chocolate mass contains at least the following constituents: cocoa powder and an oil or fat additive.

5. Cocoa product according to Claim 4,
**characterized in that** at least one further constituent of the following constituents is contained in the chocolate mass: sugar, milk powder, flavouring substance, cinnamon, vanillin.

6. Cocoa product according to Claim 4 or 5, **characterized in that** the oil or fat additive is at least one oil or fat from the following group: cocoa butter, hazelnut oil, apricot oil, vegetable fat, soya lecithin, sal butter, coconut oil, shea butter.

7. Cocoa product according to any one of Claims 1 to 6, **characterized in that** the edible oil is sesame or rapeseed oil.

## Revendications

1. Produit prêt à la consommation à base de cacao, qui comprend une masse de chocolat indéformable, homogène en matière de type, de consistance et de saveur, dans laquelle sont contenus des éclats de graines de sarrasin,
**caractérisé en ce que** les éclats détiennent une taille fragmentaire comprise entre 50 µm et 2000 µm, dont une première part d'éclats d'une taille fragmentaire comprise entre 50 µm et 200 µm, une deuxième part d'éclats d'une taille fragmentaire comprise entre 200 µm et 500 µm, ainsi qu'une troisième part d'éclats d'une taille fragmentaire comprise entre 500 µm t 2000 µm sont contenues en distribution dans la masse de chocolat, et
**en ce que** la première part est supérieure à la deuxième part et la deuxième part est supérieure à la troisième part,
**en ce que** les éclats des graines de sarrasin sont obtenus par le biais d'un traitement préliminaire influençant la consistance des graines de sarrasin, lors duquel les graines de sarrasin sont soumises au moins à une torréfaction en utilisant de l'huile alimentaire, lors duquel des graines de sarrasin sont mises à disposition sans traitement préliminaire additionnel et sont chauffées à la manière d'une torréfaction pour obtenir des graines de sarrasin pré-torréfiées et on ajoute aux graines de sarrasin pré-torréfiées, en poursuivant la torréfaction de l'huile alimentaire, de telle sorte que l'huile alimentaire soit ajoutée aux graines de sarrasin dans une quantité telle que les graines de sarrasin soit totalement humectées en superficie par l'huile alimentaire, la poursuite de la torréfaction ayant lieu jusqu'à ce que les graines de sarrasin adoptent une coloration dorée, provoquée par l'absorption d'huile et la torréfaction, et par une fragmentation consécutive, et
**en ce que** les éclats de sarrasins sont mélangés en distribution régulière dans la masse de chocolat solide.

2. Produit à base de chocolat selon la revendication 1, **caractérisé en ce qu'**on humidifie superficiellement les graines de sarrasin huilées et dorées par torréfaction d'une solution contenant du sel, du sucre ou au moins un arôme par voie d'une application par pulvérisation,
et
**en ce qu'**on poursuit la torréfaction à une température de torréfaction d'un maximum de 200 °C, jusqu'à obtenir les graines de sarrasin torréfiées exemptes de solvant, contenant du sel, du sucre ou de l'arôme.

3. Produit à base de chocolat selon la revendication 1 ou 2,
**caractérisé en ce que** la fragmentation des graines de sarrasin s'est effectuée par voir d'un processus de concassage et/ou de broyage.

4. Produit à base de chocolat selon l'une quelconque des revendications 1 à 3,
**caractérisé en ce que** la masse de chocolat contient au moins les ingrédients suivants : de la poudre de cacao, ainsi qu'une adjonction d'huile ou de graisse.

5. Produit à base de chocolat selon la revendication 4, **caractérisé en ce qu'**au moins un ingrédient additionnel parmi les ingrédients suivants est contenu dans la masse de chocolat : du sucre, du lait en poudre, un agent aromatisant, de la cannelle, de la vanilline.

6. Produit à base de chocolat selon la revendication 4 ou 5,
**caractérisé en ce que** l'adjonction d'huile ou de graisse est une huile ou une graisse relevant du groupe suivant comprenant : le beurre de cacao, l'huile de noisette, l'huile d'abricot, les graisses végétales, la lécithine de soja, le beurre de sal, la graisse de coco, le beurre de karité.

7. Produit à base de chocolat selon l'une quelconque des revendications 1 à 6,
**caractérisé en ce que** l'huile alimentaire est de l'huile de sésame de l'huile de colza.
